# EUROPÄISCHE PATENTSCHRIFT

(11) **EP 3 418 533 B1**
(45) Veröffentlichungstag und Bekanntmachung des Hinweises auf die Patenterteilung: **22.04.2020**
(21) Anmeldenummer: 18176737.7
(22) Anmeldetag: 08.06.2018
(51) Int. Cl.: F02B 75/04, F16C 7/06

(54) **PLEUEL FÜR EINE BRENNKRAFTMASCHINE MIT VARIABLER VERDICHTUNG**
CONNECTING ROD FOR A COMBUSTION ENGINE WITH VARIABLE COMPRESSION
BIELLE POUR UN MOTEUR À COMBUSTION INTERNE À COMPRESSION VARIABLE

(30) Priorität: 23.06.2017 DE 102017113951; 15.02.2018 DE 102018103387
(43) Veröffentlichungstag der Anmeldung: 26.12.2018
(73) Patentinhaber: ECO Holding 1 GmbH, 97828 Marktheidenfeld (DE)
(72) Erfinder: Huber, David, 63739 Aschaffenburg (DE); Schulze, Dietmar, 35516 Münzenberg (DE); Mudra, Alexander, 97828 Marktheidenfeld (DE)

(56) Entgegenhaltungen:
- EP-A1- 2 843 209
- DE-A1-102015 109 580
- DE-A1-102015 109 924
- DE-A1-102015 213 278

## Beschreibung

### Technisches Gebiet

Die Erfindung betrifft einen Pleuel für eine Brennkraftmaschine mit einer Exzenter-Verstelleinrichtung zur Verstellung einer effektiven Pleuelstangenlänge, und eine Brennkraftmaschine mit einem einstellbaren Verdichtungsverhältnis mit einem solchen Pleuel.

### Stand der Technik

Bei Brennkraftmaschinen wirkt sich ein hohes Verdichtungsverhältnis positiv auf den Wirkungsgrad des Verbrennungsmotors aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuellänge bekannt.

Ein gattungsgemäßer Pleuel ist aus der DE 10 2015 103 463 A1 bekannt.

### Offenbarung der Erfindung

Eine Aufgabe der Erfindung ist es, einen verbesserten, kostengünstigen und für den Serienprozess optimierten Pleuel für eine Brennkraftmaschine mit variabler Verdichtung zu schaffen, welches prozesssicher herzustellen ist.

Eine weitere Aufgabe ist es, eine Brennkraftmaschine mit variabler Verdichtung mit einem solchen Pleuel zu schaffen.

Die vorgenannten Aufgaben werden mit den Merkmalen der unabhängigen Ansprüche gelöst.

Günstige Ausgestaltungen und Vorteile der Erfindung ergeben sich aus den weiteren Ansprüchen, der Beschreibung und der Zeichnung.

Nach einem Aspekt der Erfindung wird ein Pleuel für eine Brennkraftmaschine mit variabler Verdichtung vorgeschlagen, umfassend ein Hublagerauge zur Anbindung des Pleuels an eine Kurbelwelle der Brennkraftmaschine, ein Pleuellagerauge zur Anbindung des Pleuels an einen Zylinderkolben der Brennkraftmaschine, eine Exzenter-Verstelleinrichtung zur Verstellung einer effektiven Pleuelstangenlänge, wobei die Exzenter-Verstelleinrichtung einen mit einem Exzenterhebel zusammenwirkenden und drehfest verbundenen Exzenter aufweist, in welchem ein Kolbenbolzen des Zylinderkolbens aufnehmbar ist. Die Exzenter-Verstelleinrichtung weist zwei Hydraulikkammern mit jeweils einem Kolben auf, der in einer Zylinderbohrung verschiebbar geführt und mit einer Stützstange verbunden ist, welche am anderen Ende mit dem Exzenterhebel verbunden ist. Die Stützstange ist mehrteilig ausgebildet.

Vorteilhaft ist es so möglich, eine günstigere, leichtere, robustere und für einen Serienprozess optimierte Stützstange, bzw. Stützstangen-Kolben-Baugruppe herzustellen und damit einen verbesserten Pleuel darzustellen.

Erfindungsgemäß lässt sich eine günstige Geometrie der Stützstangen erreichen. Anstelle eines aus Vollmaterial gefertigten Dreh-Frästeils, setzt sich die Stützstange aus drei Bauteilen zusammen: Gelenkteil, Stangenteil und Kolbenverbindungsteil, welches zweckmäßigerweise als Kugel ausgebildet sein kann, um möglichst große Beweglichkeit in der Verbindung von Stützstange und Kolben zu erreichen. Dabei kann die Kugel mittels eines Schweißverfahrens, insbesondere durch Reibschweißen oder einem anderen geeigneten Schweißprozess mit dem Stangenteil verbunden sein. Das Gelenkteil kann weiter durch ein geeignetes Schweißverfahren, beispielsweise Laserschweißen, mit dem Stangenteil verbunden sein. Die Montagereihenfolge kann jedoch auch umgekehrt sein. Das Gelenkteil kann auch durch eine Kugelverbindung dargestellt sein. Das Stangenteil kann aus einem Vollmaterial ausgebildet sein oder als hohl ausgeführte Buchse oder ein Rohr. Hierfür kann ein genormtes Rohr oder Rundstahl verwendet werden. Ebenso kann das Stangenteil im Querschnitt von einem Kreis abweichen, wie er bei einem einfachen Rundmaterial vorliegt, und eine polygonale Form oder ein anderes Profil aufweisen, welches günstigerweise ein auf Biegesteifigkeit optimiertes Flächenmoment aufweisen kann. Die Stützstange kann gemäß einem weiteren Ausführungsbeispiel auch zweiteilig sein und aus Gelenkteil und Kugelstange bestehen, wobei die Kugel als Kolbenverbindungsteil und das Stangenteil als einzelnes Drehteil ausgebildet sein können.

In Verbindung mit der gebauten Stützstange kann ein Stützkolben ohne Sicherungsring verwendet werden, sodass die Stützstangenbaugruppe einen zweiteiligen Kolben aufweisen kann.

Vorteilhaft können so sowohl die Bauteile der Stützstange (Kolbenverbindungsteil, Gelenkteil, Stangenteil) als auch des Stützkolbens (Kugelpfanne und Kolben) als Drehteile oder Normteile ausgebildet sein, sodass die gesamte Baugruppe kostengünstig hergestellt werden kann.

Das Reibschweißverfahren stellt, insbesondere für Serienprozesse mit hohen Stückzahlen, ein kostengünstiges Fügeverfahren dar. So können die Kolben des Pleuels besonders gut in einem automatisierten Serienmontageprozess hergestellt werden.

Durch die konstruktive Ausführung ohne Sicherungsring kann sowohl der Montageschritt "Sicherungsring einsetzen" als auch das Bauteil Sicherungsring entfallen. Ebenso sind keine Hinterschnitte in der Stützkolbengeometrie nötig. Somit kann der Stützkolben in einer Serienproduktion vollständig und zerstörungsfrei vermessen werden, wodurch eine zuverlässige Qualitätssicherung gewährleistet werden kann.

Durch die Verwendung von Stangenprofilen, die höhere Flächenmomente aufweisen, kann die Stützstange im Hinblick auf eine Biegebelastung robuster und insgesamt leichter ausgeführt werden. Dies wirkt sich positiv, da gewichtsreduzierend, auf die oszillierenden Massen in der Brennkraftmaschine aus.

Vorteilhaft ist eine prozesssichere Verbindung, beispielsweise durch Laserschweißen, des zweiteiligen Kolbens mit der Stützstange möglich bei maximaler Kraftübertragung des Hydraulikmediums, da die Druckkraft auf die Fläche des Kolbens vollständig in eine lineare Kraft in Richtung des Stangenteils umgewandelt wird.

Ein zweiteiliger Kolben aus Kolbenbuchse und Deckel ermöglicht die Verwendung von Dichtringen, die eine geringe Elastizität aufweisen, wie beispielsweise Metallringe oder Ringe aus einem hochtemperaturbeständigen thermoplastischen Kunststoff wie Polyetheretherketon (PEEK), sodass die Kolbendichtheit erhöht werden kann.

Die Kugel als Kolbenverbindungsteil kann beispielsweise aus gehärtetem Stahl ausgeführt sein, das Stangenteil kann aus Vergütungsstahl ausgeführt sein und mit der gehärteten Kugel verschweißt sein. Günstigerweise können dabei beim Schweißen gehärtete Bereiche der Kugel vor einem Anlassen durch die hohen Temperaturen beim Schweißen geschützt werden, indem sie beispielsweise selektiv gekühlt werden.

Das Gelenkteil kann mit einer eingepressten Lagerbuchse, beispielsweise aus Bronze, ausgebildet sein. In einem anderen Ausführungsbeispiel kann die Bronzebuchse auch direkt mit dem Stangenteil verbunden sein.

Gemäß einer vorteilhaften Ausgestaltung kann die Stützstange als gebaute Stützstange ausgebildet sein. Vorteilhaft kann auf diese Weise die Stützstange aus einfachen Bauteilen modular zusammengesetzt sein, statt in aufwendigen Prozessen als Drehteil/Frästeil hergestellt zu werden. Geeignete Materialien können in günstiger Weise für die Bauteile Gelenkteil, Stangenteil, und Kolbenverbindungsteil vorgesehen werden, welche dann durch unterschiedliche geeignete Verbindungsprozesse mit geringem Aufwand verbunden werden können.

Gemäß einer vorteilhaften Ausgestaltung kann die Stützstange ein Stangenteil umfassen, an deren einem Ende ein Gelenkteil und an deren anderem Ende ein Kolbenverbindungsteil angeordnet ist, wobei das Stangenteil mit dem Gelenkteil und/oder dem Kolbenverbindungsteil mittels eines Schweißverfahrens, insbesondere eines Reibschweißverfahrens, miteinander verbunden sein kann. Günstigerweise kann das Reibschweißverfahren eingesetzt werden, um Bauteile aus unterschiedlichen Werkstoffen zu verbinden. Reibschweißen stellt ein kostengünstiges Fügeverfahren dar, welches zum Verbinden von Bauteilen mit verschiedenen geometrischen Formen geeignet ist.

Gemäß einer vorteilhaften Ausgestaltung kann das Kolbenverbindungsteil als Kugel ausgebildet sein. Eine Kugel gewährleistet hohe geometrische Freiheit beim Anbinden des Kolbens. Dadurch können Fertigungstoleranzen beim späteren Betrieb in geeigneter Weise ausgeglichen werden. Insbesondere kann die Kugel ganz oder wenigstens stellenweise da, wo es zum Vermeiden möglichen Verschleißes günstig ist, gehärtet sein.

Gemäß einer vorteilhaften Ausgestaltung kann das Gelenkteil als Kugel ausgebildet sein. Eine Kugel als Gelenkteil stellt eine geeignete und kostengünstige Verbindungskomponente zwischen Stützstange und Exzenterhebel dar. Auf diese Weise kann auch eine hohe geometrische Freiheit bei der Bewegung des Exzenterhebels gewährleistet werden. Fertigungstoleranzen können günstigerweise ausgeglichen werden.

Vorteilhaft können sowohl Gelenkteil als auch Kolbenverbindungsteil als Kugel ausgebildet sein, die mit den beiden Enden des Stangenteils verbunden sind, beispielsweise durch einen Reibschweißprozess. Diese Ausführungsform lässt sich insbesondere günstig in Verbindung mit einem einteiligen Exzenterhebel darstellen, der in einem Metallpulverspritzgussverfahren (metal injection molding = MIM) oder Feingussverfahren hergestellt ist.

Gemäß einer vorteilhaften Ausgestaltung kann das Gelenkteil als Hülse ausgebildet sein, deren Längsachse senkrecht zur Längsachse des Stangenteils ausgebildet ist. Insbesondere kann dabei das Gelenkteil eine eingepresste Lagerbuchse umfassen. Durch eine solche Ausführung des Gelenkteils kann die Verbindung zwischen Stützstange und Exzenterhebel in geeigneter Weise reibungsarm ausgebildet sein und so ein dauerhafter Betrieb des Pleuels gewährleistet werden. Insbesondere kann die Hülse aus Bronze bestehen und/oder eine Gleitbeschichtung aufweisen.

Gemäß einer vorteilhaften Ausgestaltung kann das Stangenteil als Rohr ausgebildet sein. Ein Rohr stellt ein sehr kostengünstiges Bauteil dar, da es als Normware verfügbar ist. Außerdem weist ein Rohr als Stangenteil ein günstiges Gewicht im Vergleich zu einem Bauteil aus Vollmaterial auf bei gleichzeitig hoher Biegesteifigkeit.

Gemäß einer vorteilhaften Ausgestaltung kann ein Querschnitt des Stangenteils polygonal ausgebildet sein. Auf diese Weise lassen sich Stangenteile in günstiger Weise mit einem auf Biegesteifigkeit günstig ausgebildetem Flächenmoment darstellen. Die polygonale Form kann geeignet an die kräftemäßigen Anforderungen ausgewählt werden. Auch sind verschiedene Geometrien als Normteile verfügbar.

Gemäß einer vorteilhaften Ausgestaltung kann das Kolbenverbindungsteil mit einem Sicherungsring gegen ein Herausgleiten aus dem Kolben gesichert sein. Auf diese Weise lässt sich eine sichere Verbindung zwischen Kolbenverbindungsteil und Kolben herstellen, welche auch im Dauerbetrieb eine sichere Verbindung gewährleistet.

Gemäß einer vorteilhaften Ausgestaltung kann der Kolben einen Hinterschnitt aufweisen, wodurch das Kolbenverbindungsteil gegen ein Herausgleiten gesichert ist. Dabei kann das Kolbenverbindungsteil mit einem Deckel in dem Kolben fixiert sein. Eine solche alternative Ausführungsform spart einen Sicherungsring ein. Außerdem kann eine solche Ausführung des Kolbens eine dauerhafte Verbindung zwischen Kolben und Stützstange gewährleisten, welche auch einen sonst möglichen Verschleiß eines Sicherungsrings mit möglichem Versagen der Verbindung vermeidet.

Gemäß einer vorteilhaften Ausgestaltung kann der Deckel mit dem Kolben durch Verschweißen oder Bördeln oder Einpressen verbunden sein. Der Deckel kann so auf relativ einfache und zugleich zuverlässige Weise mit dem Kolben verbunden werden und auf diese Weise eine zuverlässige und dauerhafte Verbindung zwischen Kolben und Stützstange absichern.

Gemäß einer vorteilhaften Ausgestaltung kann das Stangenteil mit dem Gelenkteil einteilig ausgebildet sein. Eine solche Stützstange stellt eine günstige Alternative mit direkt angeformtem Gelenkteil dar. Insbesondere kann dabei das Gelenkteil als Kugel ausgebildet sein, sodass eine Kugelstange dafür eingesetzt werden kann.

Nach einem weiteren Aspekt der Erfindung wird ein Verfahren zur Herstellung eines Pleuels vorgeschlagen, umfassend wenigstens die Schritte, - Herstellen einer Stützstange mit Gelenkteil, Stangenteil sowie Kolbenverbindungsteil, - Anbringen wenigstens des Gelenkteils oder wenigstens des Kolbenverbindungsteils an wenigstens einem Ende des Stangenteils mit dem Gelenkteil oder dem Kolbenverbindungsteil und - Herstellen einer festen Verbindung damit. Auf diese Weise kann die Stützstange als gebaute Stützstange ausgebildet werden. Vorteilhaft kann so die Stützstange aus einfachen Bauteilen modular zusammengesetzt werden, statt in aufwendigen Prozessen als Dreh-/Frästeil hergestellt zu werden. Geeignete Materialien können in günstiger Weise für die Bauteile Gelenkteil, Stangenteil, und Kolbenverbindungsteil vorgesehen werden, welche dann durch unterschiedliche geeignete Verbindungsprozesse mit geringem Aufwand verbunden werden können. Vorteilhaft können so sowohl die Bauteile der Stützstange (Kolbenverbindungsteil, Gelenkteil, Stangenteil) als auch des Stützkolbens (Kugelpfanne und Kolben) als Drehteile oder Normteile ausgebildet sein, sodass die gesamte Baugruppe kostengünstig hergestellt werden kann.

Gemäß einer vorteilhaften Ausgestaltung kann die Stützstange wenigstens mit dem Gelenkteil und/oder wenigstens mit dem Kolbenverbindungsteil mittels eines Schweißverfahrens, insbesondere eines Reibschweißverfahrens, verbunden werden. Das Reibschweißverfahren stellt, insbesondere für Serienprozesse mit hohen Stückzahlen, ein kostengünstiges Fügeverfahren dar. So können die Kolben des Pleuels besonders gut in einem automatisierten Serienmontageprozess hergestellt werden.

Gemäß einer vorteilhaften Ausgestaltung kann das Stangenteil mit dem Gelenkteil oder dem Kolbenverbindungsteil einteilig gefertigt werden und/oder das Kolbenverbindungsteil oder das Gelenkteil als separates Bauteil mit dem Stangenteil verbunden werden. Auf diese Weise lässt sich der Montageprozess der Stützstange geeignet vereinfachen und dennoch der Vorteil einer wenigstens teilweise gebauten Stützstange nutzen. In einem Optimierungsprozess kann das separate Bauteil mit den gewünschten Eigenschaften geeignet ausgewählt werden.

Gemäß einer vorteilhaften Ausgestaltung kann vor der Fertigstellung des Stangenteils ein Kolben auf das Stangenteil aufgeschoben und das Kolbenverbindungsteil mit aufgeschobenem Kolben mit dem Stangenteil verbunden werden. Danach kann der Kolben mit einem Deckel verschlossen, beispielsweise verschweißt werden. Auf diese Weise kann in einem einfachen Fertigungsprozess das Stangenteil mit dem Kolben verbunden werden. Auch lässt sich durch die folgende Verbindung des Kolbenverbindungsteils mit dem Kolben eine sichere und dauerhafte Verbindung zu einer Stützstange erreichen. Ein separater Sicherungsring in dem Kolben lässt sich auf diese Weise einsparen.

Nach einem weiteren Aspekt der Erfindung wird eine Brennkraftmaschine mit wenigstens einem Pleuel vorgeschlagen. Dabei ist es möglich, ein verbesserter Pleuel wie vorstehend beschrieben zu verwenden, welches eine mehrteilige und dadurch günstigere, leichtere, robustere und für einen Serienprozess optimierte Stützstange, bzw. Stützstangen-Kolben-Baugruppe aufweist. Dadurch kann ein vorteilhafter Verbrennungsprozess und damit niedrigerer Kraftstoffverbrauch in der Brennkraftmaschine umgesetzt werden.

### Kurze Beschreibung der Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

**Es zeigen beispielhaft:**
- Fig. 1: eine Vorderansicht eines ersten Ausführungsbeispiels eines erfindungsgemäßen Pleuels;
- Fig. 2: eine Seitenansicht des Pleuels gemäß Fig. 1 mit eingezeichneter Schnittebene A-A;
- Fig. 3: einen Schnitt des Pleuels entlang der Schnittebene A-A gemäß Fig. 2;
- Fig. 4: einen vergrößerten Ausschnitt Z des Pleuels gemäß Fig. 3;
- Fig. 5: die Stützstange des Pleuels gemäß Fig. 1 im Längsschnitt;
- Fig. 6: eine Stützstange eines zweiten Ausführungsbeispiels mit einem verbundenen Kolben im Längsschnitt;
- Fig. 7: eine Stützstange eines dritten Ausführungsbeispiels mit einem verbundenen Kolben im Längsschnitt;
- Fig. 8: eine Stützstange eines vierten Ausführungsbeispiels mit einem verbundenen Kolben im Längsschnitt;
- Fig. 9: eine Stützstange eines weiteren Ausführungsbeispiels in isometrischer Ansicht; und
- Fig. 10: die Stützstange gemäß Fig. 9 in einem Längsschnitt.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

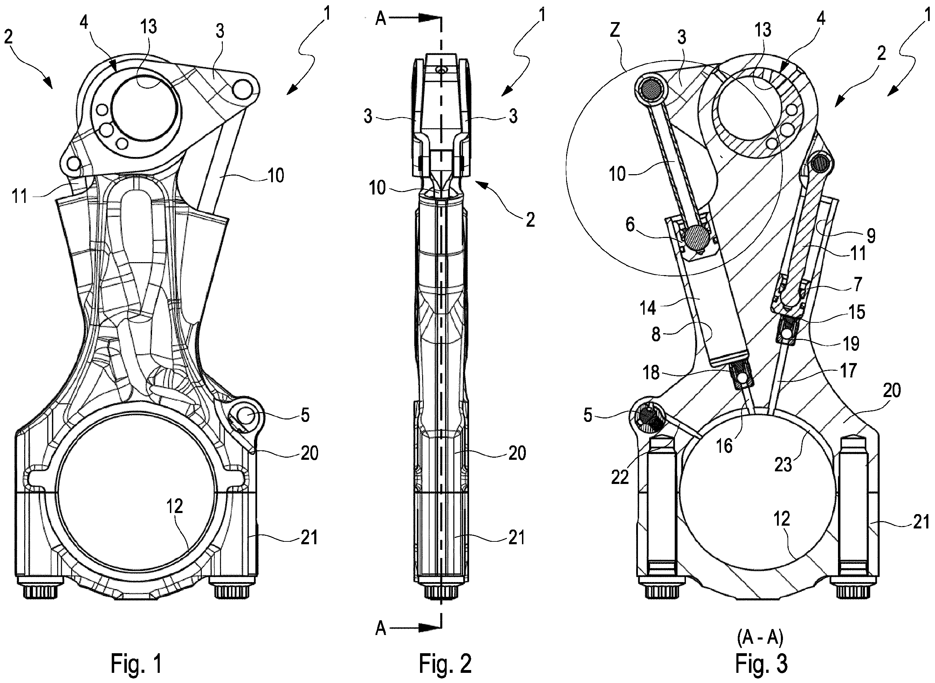

Die Figuren 1 bis 4 zeigen in schematischer Darstellung einen erfindungsgemäßen Pleuel 1 für eine Brennkraftmaschine mit variabler Verdichtung mit einer Exzenter-Verstelleinrichtung 2 zur Verstellung einer effektiven Pleuelstangenlänge, welche als Abstand der Mittelachse eines Hublagerauges 12 von der Mittelachse der Bohrung eines Exzenters 4 definiert ist. Der Pleuel 1 kann zwei Stellungen, nämlich für hohe Verdichtung ε_{high} und für niedrige Verdichtung ε_{low} einnehmen.

Der Pleuel 1 umfasst ein Hublagerauge 12 zur Anbindung des Pleuels 1 an eine Kurbelwelle einer Brennkraftmaschine, ein Pleuellagerauge 13 zur Anbindung des Pleuels 1 an einen Zylinderkolben der Brennkraftmaschine, eine Exzenter-Verstelleinrichtung 2 zur Verstellung einer effektiven Pleuelstangenlänge.

Die Exzenter-Verstelleinrichtung 2 weist den mit einem ein oder mehrteiligen Exzenterhebel 3 zusammenwirkenden Exzenter 4 auf, in welchem im Betrieb ein nicht gezeigter Kolbenbolzen eines Zylinderkolbens aufgenommen ist. Ein Verstellweg der Exzenter-Verstelleinrichtung 2 ist mittels eines Umschaltventils 5 verstellbar.

Eine Verdrehung der verstellbaren Exzenter-Verstelleinrichtung 2 kann durch Einwirken von Massenkräften (bei niedriger Verdichtung ε_{low}) und Gaslastkräften (bei hoher Verdichtung ε_{high}) der Brennkraftmaschine initiiert werden, die bei einem Arbeitstakt der Brennkraftmaschine auf die Exzenter-Verstelleinrichtung 2 wirken. Während eines Arbeitstaktes verändern sich die Wirkungsrichtungen der auf die Exzenter-Verstelleinrichtung 2 wirkenden Kräfte kontinuierlich. Die Drehbewegung oder Verstellbewegung wird durch einen oder mehrere mit Hydraulikflüssigkeit, insbesondere mit Motoröl, beaufschlagte, im Pleuel 1 integrierte Kolben 6, 7 unterstützt, bzw. die Kolben 6, 7 verhindern ein Rückstellen der Exzenter-Verstelleinrichtung 2 aufgrund variierender Kraftwirkungsrichtungen der auf die Exzenter-Verstelleinrichtung 2 wirkenden Kräfte.

Die Kolben 6, 7 sind jeweils in einer Zylinderbohrung 8, 9 eines Hydraulikzylinders des Pleuels 1 verschiebbar geführt und mit Stützstangen 10, 11 verbunden, welche ihrerseits mit dem Exzenterhebel 3 gelenkig verbunden sind.

Das Pleuel 1 weist das Hublagerauge 12 zur Anbindung des Pleuels 1 an eine Kurbelwelle einer Brennkraftmaschine sowie ein Pleuellagerauge 13 zur Anbindung des Pleuels 1 an den Zylinderkolben der Brennkraftmaschine auf.

Die Kolben 6, 7 sind in durch die Zylinderbohrungen 8, 9 gebildete Hydraulikkammern 14, 15 verschiebbar angeordnet und über Zuläufe 16, 17 von dem Hublagerauge 12 aus mit Hydraulikflüssigkeit, beispielsweise Motoröl über Rückschlagventile 18, 19 beaufschlagt. Diese verhindern dabei ein Rückfließen der Hydraulikflüssigkeit aus den Hydraulikkammern 14, 15 zurück in die Zuläufe 16, 17, ermöglichen jedoch ein Nachsaugen von Hydraulikflüssigkeit in die Hydraulikkammern 14, 15.

Die Hydraulikkammern 14, 15 sind weiter über nicht dargestellte Abläufe mit dem Umschaltventil 5 verbunden, welches als Hydraulikventil oder als mechanisches Ventil ausgebildet sein kann und über eine Ablaufleitung 22 mit dem Hublagerauge 12 verbunden ist.

Wie beispielsweise aus Figur 3 ersichtlich ist, weist der Pleuel 1 einen Pleuelkörper 20 und einen daran befestigten Pleueldeckel 21 auf.

Auf einem Umfang des Hublagerauges 12 ist im Bereich des Pleuelkörpers 20 eine Nut 23 vorgesehen, in welche die Zuläufe 16, 17 sowie die Ablaufleitung 22 münden. Dadurch, dass die Nut 23 nur auf einem Teil des Umfangs des Hublagerauges 12 angeordnet ist, wird auch die Tragfähigkeit des Lagers in dem Hublagerauge 12 möglichst wenig beeinträchtigt.

Der Aufbau des beschriebenen Pleuels 1 ist nur beispielhaft dargestellt und die erfindungsgemäße Exzenterhebelverbindung kann auch in anderen Ausführungsvarianten eines Pleuels mit einer Exzenter-Verstelleinrichtung Anwendung finden. So ist es beispielsweise möglich, das Umschaltventil 5 im Bereich des Pleueldeckels 21 anzuordnen. Ferner können die beschriebenen Rückschlagventile 18, 19 im Umschaltventil 5 integriert vorgesehen sein. Auch die hydraulische Versorgung der Hydraulikkammern 14, 15 kann von der beschriebenen Ausführung abweichen.

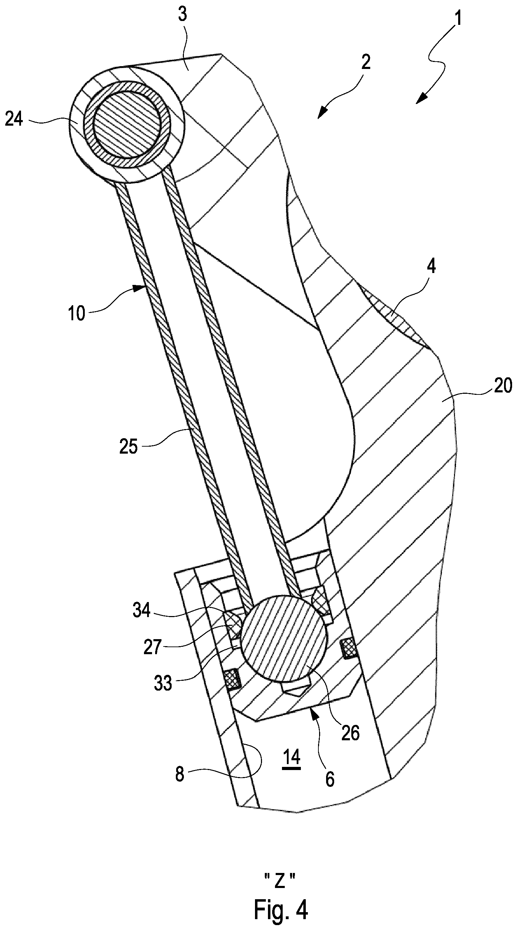

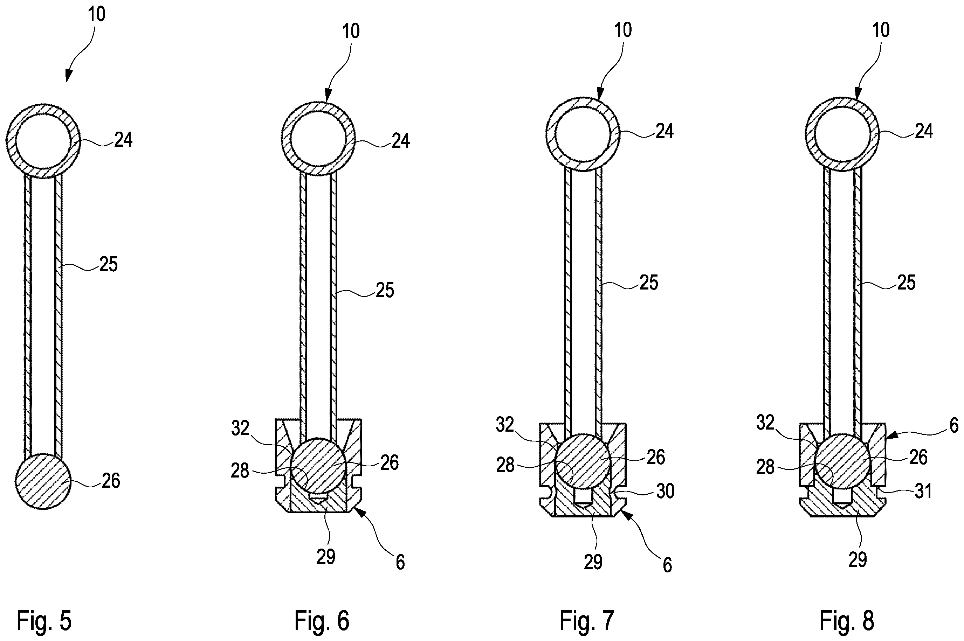

In Figur 4 ist ein erstes Ausführungsbeispiel des Pleuel 1 mit einer optimierten, in Figur 5 einzeln gezeigten GKS-Stützstange 10 vergrößert dargestellt. Die Erfindung wird beispielhaft anhand der Stützstange 10 auf der Gaskraftseite (GKS) des Pleuels 1 beschrieben. Dabei ist der Pleuel 1 in der Stellung für hohe Verdichtung ε_{high}. Die Ausführungen sind nicht auf die GKS-Stützstange 10 begrenzt, sondern es können grundsätzlich beide Stützstangen 10,11 in gleicher Weise ausgestaltet sein.

Die Stützstange 10 ist mehrteilig ausgeführt und als gebaute Stützstange ausgebildet. Die Stützstange 10 weist die Bauteile Gelenkteil 24, Stangenteil 25 sowie Kolbenverbindungsteil 26 auf. Das Stangenteil 25 ist an einem Ende mit dem Gelenkteil 24 und am anderen Ende mit dem Kolbenverbindungsteil 26 verbunden. Wenigstens zwei der Bauteile sind mittels eines Schweißverfahrens, insbesondere eines Reibschweißverfahrens, miteinander verbunden. Das Kolbenverbindungsteil 26 ist als Kugel ausgebildet.

Das Gelenkteil 24 ist als Hülse ausgebildet, deren Längsachse senkrecht zur Längsachse des Stangenteils 25 ausgebildet ist. Insbesondere kann dabei das Gelenkteil 24 eine eingepresste Lagerbuchse umfassen.

Wie in Figur 4 zu erkennen, ist das Stangenteil 25 als Rohr ausgebildet. Alternativ kann auch ein Stangenteil mit einem polygonalen Querschnitt oder einem anderen Profil für ein auf Biegesteifigkeit optimiertes Flächenmoment eingesetzt werden. Alternativ kann das Stangenteil 25 aus Vollmaterial gebildet sein.

Das als Kugel ausgebildete Kolbenverbindungsteil 26 ist in den Kolben eingeführt. Die Stützstange 10 wird dabei durch einen Sicherungsring 27, welcher durch einen an einem Ausschnitt 33 im Kolben 6 angeordneten Hinterschnitt 34 gehalten ist, gegen ein Herausgleiten aus der Aufnahme 33 gesichert. Der Sicherungsring 27 kann auch teilweise auf seinem Umfang offen oder geschlitzt ausgebildet sein. Der Sicherungsring 27 kann zweckmäßig als federnder Ring sich nach radial außen an dem Ausschnitt 33 des Kolbens 6 abstützen.

So umfasst ein Verfahren zur Herstellung eines Pleuels 1 wenigstens die Schritte, - Herstellen einer Stützstange 10, 11 mit Gelenkteil 24, Stangenteil 25 sowie Kolbenverbindungsteil 26, - Anbringen wenigstens des Gelenkteils 24 oder wenigstens des Kolbenverbindungsteils 26 an wenigstens einem Ende des Stangenteils 25 mit dem Gelenkteil 24 oder dem Kolbenverbindungsteil 26 und - Herstellen einer festen Verbindung damit.

Die Stützstange 10, 11 wird dabei mit dem Gelenkteil 24 und/oder mit dem Kolbenverbindungsteil 26 mittels eines Schweißverfahrens, insbesondere eines Reibschweißverfahrens, verbunden.

Alternativ kann das Stangenteil 25 mit dem Gelenkteil 24 oder dem Kolbenverbindungsteil 26 auch einteilig gefertigt sein und/oder das Kolbenverbindungsteil 26 werden das Gelenkteil 24 als separates Bauteil mit dem Stangenteil 25 verbunden wird.

Drei Stützstangenbaugruppen ohne Sicherungsring sind in den Figuren 6 bis 8 dargestellt.

Figur 6 zeigt eine weitere Ausführungsform der Stützstange 10 mit einer eingepressten Kugelpfanne 28. Die Kugelpfanne 28 ist in einem Deckel 29 ausgebildet, welcher in den Kolben 6 eingepresst wird. Dabei wird zunächst die Kugel 26 an das Stangenteil 25 angeschweißt. Diese Baugruppe wird in den Kolben 6 geschoben, welcher hier als Kolbenbuchse ausgebildet ist. Der Kolben 6 weist einen Hinterschnitt 32 auf, wodurch das Kolbenverbindungsteil 26 gegen ein Herausgleiten gesichert ist. Das Kolbenverbindungsteil 26 ist mit einem Deckel 29 in dem Kolben 6 fixiert.

Vor der Fertigstellung des Stangenteils 25 wird der Kolben 6 auf das Stangenteil 25 aufgeschoben und das Kolbenverbindungsteil 26 mit aufgeschobenem Kolben 6 mit dem Stangenteil 25 verbunden.

Bei der in Figur 6 dargestellten Ausführungsform wird der Deckel 29 mit der Kugelpfanne 28 in den Kolben 6 eingepresst. Auf diese Weise kann eine feste Verbindung zwischen Kolben 6 und Deckel 29 hergestellt werden, welche auch im Dauerbetrieb zuverlässig hält. Zum Schluss wird das Gelenkteil 24 angeschweißt.

Die weitere Ausführungsform gemäß Figur 7 zeigt im Unterschied zur Ausführung gemäß Figur 6 einen gebördelten Kolben 6, bei welchem der Deckel 29 durch eine Bördelung 30 des Kolbens 6 bzw. der Kolbenbuchse befestigt wird.

Die Ausführungsform gemäß Figur 8 sieht vor, den Deckel 29 in die Kolbenbuchse einzupressen und anschließend an der Kolbenbuchse mit einer umlaufenden Schweißnaht 31 anzuschweißen.

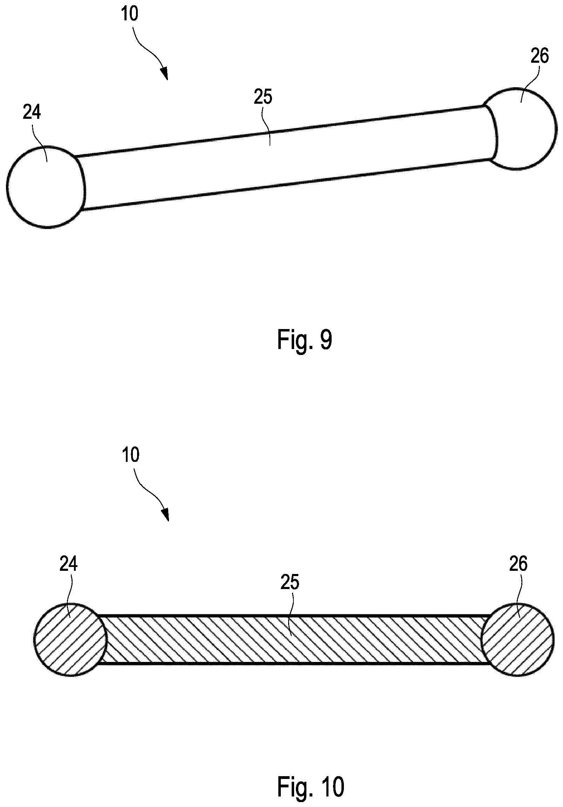

Als weitere, in den Figuren 9 und 10 dargestellte Ausführungsform weist die Stützstange 10 sowohl als Gelenkteil 24 als auch als Kolbenverbindungsteil 26 eine Kugel auf, welche mit den jeweiligen Enden eines Stangenteils 25 verbunden sind. Diese Variante lässt sich besonders gut in Verbindung mit einem einteiligen Exzenterhebel 3, der in einem MIM-Verfahren oder Feingussverfahren hergestellt worden ist, realisieren. Vorteilhaft können Standardelemente wie gehärtete Kugeln für das Gelenkteil 24 und das Kolbenverbindungsteil 26 und Stangen oder Rohre für das Stangenteil 25 verwendet werden.

## Patentansprüche

1. Pleuel (1) für eine Brennkraftmaschine mit variabler Verdichtung, umfassend ein Hublagerauge (12) zur Anbindung des Pleuels (1) an eine Kurbelwelle der Brennkraftmaschine,
ein Pleuellagerauge (13) zur Anbindung des Pleuels (1) an einen Zylinderkolben der Brennkraftmaschine, eine Exzenter-Verstelleinrichtung (2) zur Verstellung einer effektiven Pleuelstangenlänge, wobei die Exzenter-Verstelleinrichtung (2) einen mit einem Exzenterhebel (3) zusammenwirkenden und drehfest verbundenen Exzenter (4) aufweist, in welchem ein Kolbenbolzen des Zylinderkolbens aufnehmbar ist, wobei die Exzenter-Verstelleinrichtung (2) zwei Hydraulikkammern (14, 15) mit jeweils einem Kolben (6, 7) aufweist, der in einer Zylinderbohrung (8, 9) verschiebbar geführt und mit einer Stützstange (10, 11) verbunden ist, welche am anderen Ende mit dem Exzenterhebel (3) verbunden ist,
wobei die Stützstange (10) mehrteilig ausgebildet ist.

2. Pleuel nach Anspruch 1, wobei die Stützstange (10) als gebaute Stützstange ausgebildet ist.

3. Pleuel nach Anspruch 1 oder 2, wobei die Stützstange (10) ein Stangenteil (25) umfasst, an deren einem Ende ein Gelenkteil (24) und an deren anderen Ende ein Kolbenverbindungsteil (26) angeordnet ist, wobei das Stangenteil (25) mit dem Gelenkteil (24) und/oder dem Kolbenverbindungsteil (26) mittels eines Schweißverfahrens, insbesondere eines Reibschweißverfahrens, verbunden ist.

4. Pleuel nach Anspruch 3, wobei das Kolbenverbindungsteil (26) als Kugel ausgebildet ist.

5. Pleuel nach Anspruch 3 oder 4, wobei das Gelenkteil (24) als Kugel ausgebildet ist.

6. Pleuel nach Anspruch 3 oder 4, wobei das Gelenkteil (24) als Hülse ausgebildet ist, deren Längsachse senkrecht zur Längsachse des Stangenteils (25) ausgebildet ist, insbesondere wobei das Gelenkteil (24) eine eingepresste Lagerbuchse umfasst.

7. Pleuel nach einem der vorhergehenden Ansprüche 3 bis 6, wobei das Stangenteil (25) als Rohr ausgebildet ist.

8. Pleuel nach einem der vorhergehenden Ansprüche 3 bis 7, wobei ein Querschnitt des Stangenteils (25) polygonal ausgebildet ist.

9. Pleuel nach einem der vorhergehenden Ansprüche 3 bis 8, wobei das Kolbenverbindungsteil (26) mit einem Sicherungsring (27) gegen ein Herausgleiten aus dem Kolben (6, 7) gesichert ist.

10. Pleuel nach einem der vorhergehenden Ansprüche 3 bis 9, wobei der Kolben (6, 7) einen Hinterschnitt (32) aufweist, wodurch das Kolbenverbindungsteil (26) gegen ein Herausgleiten gesichert ist, und wobei das Kolbenverbindungsteil (26) mit einem Deckel (29) in dem Kolben (6, 7) fixiert ist.

11. Pleuel nach Anspruch 10, wobei der Deckel (29) mit dem Kolben (6, 7) durch Verschweißen oder Bördeln oder Einpressen verbunden ist.

12. Pleuel nach einem der vorhergehenden Ansprüche 3 bis 11, wobei das Stangenteil (25) mit dem Gelenkteil (24) einteilig ausgebildet ist.

13. Verfahren zur Herstellung eines Pleuels (1) nach einem der vorhergehenden Ansprüche 3 bis 12, umfassend wenigstens die Schritte,
- Herstellen einer Stützstange (10, 11) mit Gelenkteil (24), Stangenteil (25) sowie Kolbenverbindungsteil (26),
- Anbringen wenigstens des Gelenkteils (24) oder wenigstens des Kolbenverbindungsteils (26) an wenigstens einem Ende des Stangenteils (25) mit dem Gelenkteil (24) oder dem Kolbenverbindungsteil (26) und
- Herstellen einer festen Verbindung damit.

14. Verfahren nach Anspruch 13, wobei die Stützstange (10, 11) wenigstens mit dem Gelenkteil (24) und/oder wenigstens mit dem Kolbenverbindungsteil (26) mittels eines Schweißverfahrens, insbesondere eines Reibschweißverfahrens, verbunden wird.

15. Verfahren nach Anspruch 13 oder 14, wobei das Stangenteil (25) mit dem Gelenkteil (24) oder dem Kolbenverbindungsteil (26) einteilig gefertigt wird und/oder das Kolbenverbindungsteil (26) oder das Gelenkteil (24) als separates Bauteil mit dem Stangenteil (25) verbunden wird.

16. Verfahren nach einem der Ansprüche 13 bis 15, wobei vor der Fertigstellung des Stangenteils (25) ein Kolben (6, 7) auf das Stangenteil (25) aufgeschoben und das Kolbenverbindungsteil (26) mit aufgeschobenem Kolben (6, 7) mit dem Stangenteil (25) verbunden wird.

17. Brennkraftmaschine mit einem einstellbaren Verdichtungsverhältnis mit wenigstens einem Pleuel (1) nach einem der Ansprüche 1 bis 12.

## Claims

1. Connecting rod (1) for an internal combustion engine with variable compression, comprising a crank bearing eye (12) for attachment of the connecting rod (1) to a crankshaft of the internal combustion engine,
a connecting-rod bearing eye (13) for attachment of the connecting rod (1) to a cylinder piston of the internal combustion engine, an eccentric adjusting device (2) for adjusting an effective connecting-rod length, wherein the eccentric adjusting device (2) has an eccentric (4) which interacts with and is connected rotationally conjointly to an eccentric lever (3) and in which a piston pin of the cylinder piston can be received, wherein the eccentric adjusting device (2) has two hydraulic chambers (14, 15) with in each case one piston (6, 7) which is guided displaceably in a cylinder bore (8, 9) and which is connected to a support rod (10, 11), which support rod is connected at the other end to the eccentric lever (3), wherein the support rod (10) is of multi-part form.

2. Connecting rod according to Claim 1, wherein the support rod (10) is designed as an assembled support rod.

3. Connecting rod according to Claim 1 or 2, wherein the support rod (10) comprises a rod part (25), at one end of which there is arranged a joint part (24) and at the other end of which there is arranged a piston connection part (26), wherein the rod part (25) is connected to the joint part (24) and/or to the piston connection part (26) by means of a welding process, in particular a friction welding process.

4. Connecting rod according to Claim 3, wherein the piston connection part (26) is in the form of a ball.

5. Connecting rod according to Claim 3 or 4, wherein the joint part (24) is in the form of a ball.

6. Connecting rod according to Claim 3 or 4, wherein the joint part (24) is in the form of a sleeve, the longitudinal axis of which is configured to be perpendicular to the longitudinal axis of the rod part (25), wherein, in particular, the joint part (24) comprises a pressed-in bearing bushing.

7. Connecting rod according to any of the preceding Claims 3 to 6, wherein the rod part (25) is in the form of a tube.

8. Connecting rod according to any of the preceding Claims 3 to 7, wherein a cross section of the rod part (25) is of polygonal form.

9. Connecting rod according to any of the preceding Claims 3 to 8, wherein the piston connection part (26) is secured against sliding out of the piston (6, 7) by means of a securing ring (27).

10. Connecting rod according to any of the preceding Claims 3 to 9, wherein the piston (6, 7) has an undercut (32), whereby the piston connection part (26) is secured against sliding out, and wherein the piston connection part (26) is fixed to a cover (29) in the piston (6, 7).

11. Connecting rod according to Claim 10, wherein the cover (29) is connected to the piston (6, 7) by welding or flanging or pressing-in.

12. Connecting rod according to any of the preceding Claims 3 to 11, wherein the rod part (25) is formed as a single piece with the joint part (24).

13. Method for producing a connecting rod (1) according to any of the preceding Claims 3 to 12, comprising at least the steps
- producing a support rod (10, 11) with joint part (24), rod part (25) and piston connection part (26),
- attaching at least the joint part (24) or at least the piston connection part (26) to at least one end of the rod part (25) with the joint part (24) or the piston connection part (26) and
- producing a fixed connection thereto.

14. Method according to Claim 13, wherein the support rod (10, 11) is connected at least to the joint part (24) and/or at least to the piston connection part (26) by means of a welding process, in particular a friction welding process.

15. Method according to Claim 13 or 14, wherein the rod part (25) is manufactured as a single piece with the joint part (24) or with the piston connection part (26), and/or the piston connection part (26) or the joint part (24) is connected as a separate component to the rod part (25).

16. Method according to any of Claims 13 to 15, wherein, prior to the completion of the rod part (25), a piston (6, 7) is pushed onto the rod part (25) and the piston connection part (26) with pushed-on piston (6, 7) is connected to the rod part (25).

17. Internal combustion engine with an adjustable compression ratio, having at least one connecting rod (1) according to any of Claims 1 to 12.

## Revendications

1. Bielle (1) pour un moteur à combustion interne à compression variable, comprenant un œil de palier de levage (12) pour le raccordement de la bielle (1) au vilebrequin du moteur à combustion interne, un œil de palier de levage (13) pour le raccordement de la bielle (1) à un piston de cylindre du moteur à combustion interne, un dispositif de réglage à excentrique (2) pour le réglage d'une longueur effective de la tige de bielle, le dispositif de réglage à excentrique (2) présentant un excentrique (4) coopérant et connectée de manière solidaire en rotation avec un levier excentrique (3), dans lequel un axe de piston du piston de cylindre peut être reçu, le dispositif de réglage à excentrique (2) présentant deux chambres hydrauliques (14, 15) ayant chacune un piston (6, 7) qui est guidé de manière déplaçable dans un alésage de cylindre (8, 9) et qui est connecté à une tige de support (10, 11) qui est connectée à son autre extrémité au levier excentrique (3), la tige de support (10) étant réalisée en plusieurs parties.

2. Bielle selon la revendication 1, dans laquelle la tige de support (10) est réalisée sous forme de tige de support montée.

3. Bielle selon la revendication 1 ou 2, dans laquelle la tige de support (10) comprend une partie de tige (25) au niveau d'une extrémité de laquelle est disposée une partie d'articulation (24) et au niveau de l'autre extrémité de laquelle est disposée une partie de connexion de piston (26), la partie de tige (25) étant connectée à la partie d'articulation (24) et/ou à la partie de connexion de piston (26) au moyen d'un procédé de soudage, en particulier d'un procédé de soudage par friction.

4. Bielle selon la revendication 3, dans laquelle la partie de connexion de piston (26) est réalisée sous forme de boule.

5. Bielle selon la revendication 3 ou 4, dans laquelle la partie d'articulation (24) est réalisée sous forme de boule.

6. Bielle selon la revendication 3 ou 4, dans laquelle la partie d'articulation (24) est réalisée sous forme de manchon dont l'axe longitudinal est réalisé perpendiculairement à l'axe longitudinal de la partie de tige (25), en particulier dans laquelle la partie d'articulation (24) comprend une douille palier enfoncée à force.

7. Bielle selon l'une quelconque des revendications 3 à 6, dans laquelle la partie de tige (25) est réalisée sous forme de tube.

8. Bielle selon l'une quelconque des revendications 3 à 7, dans laquelle une section transversale de la partie de tige (25) est réalisée sous forme polygonale.

9. Bielle selon l'une quelconque des revendications 3 à 8, dans laquelle la partie de connexion de piston (26) est empêchée de glisser hors du piston (6, 7) par une bague de fixation (27).

10. Bielle selon l'une quelconque des revendications précédentes 3 à 9, dans laquelle le piston (6, 7) présente une contre-dépouille (32) par laquelle la partie de connexion de piston (26) est empêchée de sortir par glissement, et dans laquelle la partie de connexion de piston (26) est fixée dans le piston (6, 7) par un couvercle (29).

11. Bielle selon la revendication 10, dans laquelle le couvercle (29) est connecté au piston (6, 7) par soudage ou bordage ou enfoncement à force.

12. Bielle selon l'une quelconque des revendications 3 à 11, dans laquelle la partie de tige (25) est réalisée d'une seule pièce avec la partie d'articulation (24).

13. Procédé de fabrication d'une bielle (1) selon l'une quelconque des revendications précédentes 3 à 12, comprenant au moins les étapes suivantes :
- fabrication d'une tige de support (10, 11) avec une partie d'articulation (24), une partie de tige (25) et une partie de connexion de piston (26),
- montage d'au moins la partie d'articulation (24) ou d'au moins la partie de connexion de piston (26) sur au moins une extrémité de la partie de tige (25) ayant la partie d'articulation (24) ou la partie de connexion de piston (26) et
- fabrication avec celles-ci d'un assemblage fixe.

14. Procédé selon la revendication 13, dans lequel la tige de support (10, 11) est connectée au moins à la partie d'articulation (24) et/ou au moins à la partie de connexion de piston (26) au moyen d'un procédé de soudage, en particulier d'un procédé de soudage par friction.

15. Procédé selon la revendication 13 ou 14, dans lequel la partie de tige (25) est fabriquée d'une seule pièce avec la partie d'articulation (24) ou la partie de connexion de piston (26) et/ou la partie de connexion de piston (26) ou la partie d'articulation (24) est connectée à la partie de tige (25) en tant que composant séparé.

16. Procédé selon l'une quelconque des revendications 13 à 15, dans lequel, avant d'achever la fabrication de la partie de tige (25), un piston (6, 7) est enfilé sur la partie de tige (25) et la partie de connexion de piston (26) est connectée à la partie de tige (25) avec le piston enfilé (6, 7) .

17. Moteur à combustion interne comprenant un rapport de compression ajustable avec au moins une bielle (1) selon l'une quelconque des revendications 1 à 12.
